# EUROPÄISCHE PATENTSCHRIFT

(11) **EP 3 786 650 B1**
(45) Veröffentlichungstag und Bekanntmachung des Hinweises auf die Patenterteilung: **14.05.2025**
(21) Anmeldenummer: 20184137.6
(22) Anmeldetag: 06.07.2020
(51) Int. Cl.: G01R 29/08, G01R 31/28, G01R 31/00, G01R 27/28

(54) **VERFAHREN UND VORRICHTUNG ZUM BEREITSTELLEN EINES VERHALTENSMODELLS FÜR DIE SIMULATION VON ELEKTROMAGNETISCHEN STÖREMISSIONEN EINER ELEKTRISCHEN BZW. ELEKTRONISCHEN KOMPONENTE**
METHOD AND DEVICE FOR PROVIDING A BEHAVIOUR MODEL FOR SIMULATING ELECTROMAGNETIC INTERFERENCE EMISSIONS OF AN ELECTRICAL OR ELECTRONIC COMPONENT
PROCÉDÉ ET DISPOSITIF DE FOURNITURE D'UN MODÈLE DE COMPORTEMENT POUR LA SIMULATION DES ÉMISSIONS D'INTERFÉRENCE ÉLECTROMAGNÉTIQUE D'UN COMPOSANT ÉLECTRIQUE OU ÉLECTRONIQUE

(30) Priorität: 27.08.2019 DE 102019212808
(43) Veröffentlichungstag der Anmeldung: 03.03.2021
(73) Patentinhaber: Robert Bosch GmbH, 70442 Stuttgart (DE)
(72) Erfinder: Aichele, Hermann, 72762 Reutlingen (DE); Keller, Christoph, 70563 Stuttgart (DE)

(56) Entgegenhaltungen:
- CN-A- 107 783 040
- SUN BINGYAO ET AL: "Common-Mode EMI Unterminated Behavioral Model of Wide-Bandgap-Based Power Converters Operating at High Switching Frequency", IEEE JOURNAL OF EMERGING AND SELECTED TOPICS IN POWER ELECTRONICS, IEEE, PISCATAWAY, NJ, USA, vol. 7, no. 4, 1 December 2019 (2019-12-01), pages 2561 - 2570, XP011755834, ISSN: 2168-6777, [retrieved on 20191029], DOI: 10.1109/JESTPE.2018.2888604
- HILLENBRAND P ET AL: "Frequency domain EMI-simulation and resonance analysis of a DCDC-converter", 2016 INTERNATIONAL SYMPOSIUM ON ELECTROMAGNETIC COMPATIBILITY - EMC EUROPE, IEEE, 5 September 2016 (2016-09-05), pages 176 - 181, XP032995753, DOI: 10.1109/EMCEUROPE.2016.7739186
- QIAN LIU ET AL: "Modular-Terminal-Behavioral (MTB) Model for Characterizing Switching Module Conducted EMI Generation in Converter Systems", IEEE TRANSACTIONS ON POWER ELECTRONICS, INSTITUTE OF ELECTRICAL AND ELECTRONICS ENGINEERS, USA, vol. 21, no. 6, 1 November 2006 (2006-11-01), pages 1804 - 1814, XP011142851, ISSN: 0885-8993, DOI: 10.1109/TPEL.2006.882903
- M. REUTER ET AL: "Emulation of conducted emissions of an automotive inverter for filter development in HV networks", 2013 IEEE INTERNATIONAL SYMPOSIUM ON ELECTROMAGNETIC COMPATIBILITY, 1 August 2013 (2013-08-01), pages 236 - 241, XP055100333, ISBN: 978-1-47-990409-9, DOI: 10.1109/ISEMC.2013.6670416
- RAMANUJAN ABHISHEK ET AL: "Developing a universal exchange format for Integrated Circuit Emission Model - Conducted Emissions", 2015 10TH INTERNATIONAL WORKSHOP ON THE ELECTROMAGNETIC COMPATIBILITY OF INTEGRATED CIRCUITS (EMC COMPO), IEEE, 10 November 2015 (2015-11-10), pages 252 - 257, XP032834037, DOI: 10.1109/EMCCOMPO.2015.7358367

## Beschreibung

### Technisches Gebiet

Die Erfindung betrifft das Gebiet der Simulation der elektromagnetischen Verträglichkeit von elektrischen bzw. elektronischen Komponenten. Insbesondere betrifft die vorliegende Erfindung das Bereitstellen von EMV-Verhaltensmodellen (EMV: elektromagnetische Verträglichkeit) für die Simulation von elektromagnetischen Störemissionen von Komponenten, um ein Verhalten der Komponente in einem realen System bzw. Umgebung vorherzusagen.

### Technischer Hintergrund

In der Praxis wird das EMV-Verhalten von elektrischen bzw. elektronischen Komponenten in einem System simuliert, um festzustellen, ob zum einen ein störungsfreier Betrieb des Systems möglich ist, und ob zum anderen die Belastung der Umgebung des Systems durch elektromagnetische Strahlung die vorgegebenen Grenzwerte nicht überschreitet. Ein wesentliches Kennzeichen des EMV-Verhaltensmodells ist, dass lediglich das Verhalten der Komponente beschrieben wird, ohne relevante Informationen über den Aufbau der Komponente preiszugeben. Dadurch kann das Knowhow in der Komponente geschützt werden, und gleichzeitig wird für die Komponente ein Simulationsmodell zur Verfügung gestellt werden, das das Verhalten bezüglich elektromagnetischer Störemissionen der Komponente hinreichend beschreibt.

Die Druckschrift CN 107783040 A offenbart ein Verfahren zum Modellieren einer elektromagnetischen Interferenz eines Gleichstrommotors, wobei die Common-Mode-Admittanzparameter und differentiellen Admittanzparameter entsprechend erfasst und bestimmt werden. Das Modell wird durch Messen einer ersten Scattering-Parametermatrix und durch Messen der laufenden Größen einer Stromquelle bezogen auf das Target ermittelt. Die Messung der Streuparameter erfolgt mithilfe des Netzwerkanalysators in einem belasteten Zustand.

Die Druckschrift SUN BINGYAO ET AL: "Common-Mode EMI Unterminated Behavioral Model of Wide-Bandgap-Based Power Converters Operating at High Switching Frequency", IEEE JOURNAL OF EMERGING AND SELECTED TOPICS IN POWER ELECTRONICS, Bd. 7, Nr. 4, 1. Dezember 2019, Seiten 2561-2570 offenbart die Verwendung eines Verhaltensmodells, um die Common-Mode-Emissionen in einem Energiebereich von 150 kHz bis 30 MHz vorherzusagen.

Die Druckschrift HILLENBRAND P ET AL: "Frequency domain EMI-simulation and resonance analysis of a DCDC-converter", 2016 INTERNATIONAL SYMPOSIUM ON ELECTROMAGNETIC COMPATIBILITY - EMC EUROPE, IEEE, 5. September 2016, Seiten 176-181 offenbart ein Frequenzdomänenmodell, um elektromagnetische Interferenzen eines Wechselrichters vorherzusagen. In diesem Modell werden die nichtlinearen und zeitvarianten Halbleiterschalter des Wechselrichters durch Spannungsquellen ersetzt, die durch Messungen während des Betriebs des Wechselrichters charakterisiert sind.

Die Druckschrift QIAN LIU ET AL: "Modular-Terminal-Behavioral (MTB) Model for Characterizing Switching Module Conducted EMI Generation in Converter Systems", IEEE TRANSACTIONS ON POWER ELECTRONICS, INSTITUTE OF ELECTRICAL AND ELECTRONICS ENGINEERS, Bd. 21, Nr. 6, 1. November 2006, Seiten 1804-1814 offenbart ein neues Verhaltensmodell für die Frequenzdomäne, um Rauschwellen für elektromagnetische Interferenzen in einem Wechselrichter zu charakterisieren. Es wird die Emission von elektromagnetischen Interferenzen eines Schalteinrichtungsmoduls unter bestimmten Schaltbedingungen mithilfe eines äquivalenten Norton-Netzwerks modelliert.

Die Druckschrift M. REUTER ET AL: "Emulation of conducted emissions of an automotive inverter for filter development in HV networks", 2013 IEEE INTERNATIONAL SYMPOSIUM ON ELECTROMAGNETIC COMPATIBILITY, 1. August 2013, Seiten 236-241 offenbart die Emulation von Emissionen eines Inverters für ein Hybridfahrzeug, wobei das emulierte Bauteil als eine Spannungsquelle in Kombination mit einem Emulationsnetzwerk des Inverters getestet wird.

Die Druckschrift RAMANUJAN ABHISHEK ET AL: "Developing a universal exchange format for Integrated Circuit Emission Model - Conducted Emissions", 2015 10TH INTERNATIONAL WORKSHOP ON THE ELECTROMAGNETIC COMPATIBILITY OF INTEGRATED CIRCUITS (EMC COMPO), IEEE, 10. November 2015, Seiten 252-257 beschreibt ein Emissionsmodell mit einem Datenaustauschformat.

### Offenbarung der Erfindung

Erfindungsgemäß sind ein Verfahren zum Bereitstellen eines EMV-Verhaltensmodells für die Simulation einer elektromagnetischen Störemission einer elektrischen bzw. elektronischen Komponente mit linearem und zeitinvariantem Verhalten gemäß Anspruch 1 sowie eine entsprechende Vorrichtung, ein Verfahren zum Simulieren eines EMV-Verhaltens einer elektrischen bzw. elektronischen Komponente mit linearem und zeitinvariantem Verhalten und eine Simulationsvorrichtung gemäß den nebengeordneten Ansprüchen vorgesehen.

Weitere Ausgestaltungen sind in den abhängigen Ansprüchen angegeben.

Gemäß einem ersten Aspekt ist ein Verfahren, insbesondere ein computer-implementiertes Verfahren zum Bereitstellen eines Verhaltensmodells, insbesondere eines EMV-Verhaltensmodells, in Form von Modelldaten für die Simulation einer durch das Verhaltensmodell beschriebenen elektrischen oder elektronischen Komponente in einer Simulationsvorrichtung vorgesehen, wobei das Verhaltensmodell das Verhalten an einem oder mehreren elektrischen Anschlüssen der Komponente beschreibt, indem das elektrische Verhalten an jedem der Anschlüsse der Komponente durch einen Anschluss-Äquivalenzschaltkreis als die Wirkung von komplexen, frequenzabhängigen elektrischen Größen von passiven elektrischen Bauelementen, insbesondere Admittanzen oder Impedanzen, und eines Quellelements, insbesondere einer Spannungs- und/oder einer Stromquelle, beschrieben wird, wobei das Verhaltensmodell durch Messung einer Impedanz/Admittanzmatrix im passiven, unbelasteten Zustand der Anschlüsse mithilfe eines Netzwerkanalysators und durch Bestimmen der komplexen, frequenzabhängigen elektrischen Größen der Quellenelemente mithilfe der Messung der Ströme und/oder Spannungen an den Anschlüssen unter einer einzigen Lastbedingung ermittelt wird.

Die vollständige Simulation von elektromagnetischen Wechselwirkungen einer Komponente, wie z.B. eines Elektromotors, einer Zündkerze, einer Radioempfangseinheit und dergleichen, in einem System erfordert in der Regel ein ausführliches Wissen über die funktionalen und parasitären Elemente der Komponente. Simulationsmodelle müssten daher alle elektromagnetischen Kopplungseffekte innerhalb der Komponente und zwischen der Komponente und dem übrigen System berücksichtigen. Dazu ist jedoch ein aufwendiger Entwicklungsprozess notwendig, insbesondere wenn der interne Aufbau der Komponente ganz oder teilweise unbekannt ist.

Mithilfe von EMV-Verhaltensmodellen kann der Entwicklungsprozess und der Prozess der Evaluierung des Einsatzes der Komponente innerhalb eines Systems erheblich vereinfacht werden, insbesondere wenn die Komponente ein lineares und zeitinvariantes Verhalten aufweist. Derartige Verhaltensmodelle verwenden einen Anschluss-Äquivalenzschaltkreis, der das Verhalten der Komponente an den Anschlüssen wiedergibt, anstatt alle Interferenzquellen und Kopplungseffekte innerhalb der Komponente zu modellieren. Konventionelle Ansätze verwenden beispielsweise einen Äquivalenzschaltkreis basierend auf Norton oder Thévenin. Beispielsweise verwendet die Thévenin-Theorie Impedanzelemente in Kombination mit Stromquellen, um das Verhalten eines Anschlusses der Komponente zu modellieren.

Zu Erstellung des Verhaltensmodells sind herkömmlich Messungen mit verschiedenen Lastbedingungen aufwändig und erzielen meistens numerisch schlecht konditionierte Modelle, die nur einen eingeschränkten Gültigkeitsbereich haben. Des Weiteren müssen die Messungen der Lastbedingungen korrekten Phasenbezug zueinander aufweisen. Diese Probleme skalieren mit der Anzahl der zu modellierenden Anschlüsse, so dass diese Methode für das Erstellen von Verhaltensmodellen mit mehr als einem Anschluss ungeeignet ist.

Eine Möglichkeit ein EMV-Verhaltensmodell zu beschreiben, stellt das Touchstone-Format dar. Das Touchstone-Format ist herkömmlich als ein Textdatei-Format zum Speichern von Netzwerkparametern, meistens von Messdaten bekannt. In dem Touchstone-Format können Scattering-.Parameter, Admittanzparameter, Impedanzparameter, Hybrid-h-Parameter sowie Hybrid-g-Parameter beschrieben werden. Das Touchstone-Format kann auch dazu verwendet werden, das Verhalten einer elektrischen bzw. elektronischen Komponente hinsichtlich ihres EMV-Verhaltens für alle elektrischen Anschlüsse der Komponente basierend auf Admittanzen und damit gekoppelten Stromquellen zu beschreiben.

Das obige Verfahren beschreibt eine alternative Vorgehensweise, die eine Erstellung eines Verhaltensmodells ohne das Anlegen verschiedene Lastbedingungen auskommt. Kern des obigen Verfahrens ist die Messung einer Impedanz/Admittanzmatrix der modellierten Anschlüsse mit einer passiven Impedanzmessung, bei der die zu charakterisierende Komponente nicht in Betrieb ist. Diese Admittanz-/Impedanzmessung kann einfach und genau beispielsweise mit einem Netzwerkanalysator durchgeführt werden, der eine entsprechende impedanz-/Admittanzmatrix bereitstellt. Für die nachfolgende Bestimmung des elektrischen Verhaltens der den Anschlüssen zuzuordnenden Quellenelemente im Verhaltensmodell ist daher die Messung von Strömen oder Spannungen ebenfalls für nur einen Lastzustand erforderlich.

Ein grundlegender Vorteil der Verwendung des EMV-Verhaltensmodells besteht darin, dass dieses nur Daten bezüglich des Verhaltens an den Anschlüssen der Komponente enthält, so dass ein Austausch des EMV-Verhaltensmodells zwischen unterschiedlichen Parteien ohne die Preisgabe von System-Knowhow möglich ist. Die Nutzung des Anschluss-Äquivalenzschaltkreises als Dateiformat für das EMV-Verhaltensmodell ermöglicht die Definition von passiven Netzwerkparametern, wie Scattering, Admittanz, Impedanz und Hybridparametern.

Weiterhin kann das Verhaltensmodell die Anschlüsse in Bezug auf ein Massepotenzial und in Bezug zu den übrigen der Anschlüsse definieren.

Weiterhin kann zur Simulation des Verhaltens der Komponente ausschließlich das Verhaltensmodell verwendet werden.

Insbesondere kann das Verhaltensmodell in einem Touchstone-Format bereitgestellt werden. Dieses stellt ein gängiges Format für die Beschreibung eines Verhaltensmodell dar.

Weiterhin kann das Verhaltensmodell eine reale Komponente mit einer Anzahl von elektrischen Anschlüssen beschreiben und dieselbe Anzahl von virtuellen Anschlüssen für die Simulation bereitstellen.

Gemäß einer Ausführungsform kann die elektrische Größe des Quellenelements jedes Anschlusses frequenzabhängig mithilfe eines Oszilloskops bestimmt werden, indem die aufgezeichneten Zeitsignale in den Frequenzbereich umgerechnet werden (beispielsweise mit einer Fouriertransformation).

Weiterhin kann die Vermessung der elektrischen Größe der passiven elektrischen Bauelementen des Anschluss-Äquivalenzschaltkreis im unbelasteten Zustand für jeden Anschluss gleichzeitig erfolgen.

Alternativ oder zusätzlich kann die Vermessung der elektrischen Größe der Quellenelemente des Anschluss-Äquivalenzschaltkreis mithilfe einer Lastadmittanz für jeden Anschluss, insbesondere gleichzeitig, erfolgen.

Gemäß einem weiteren Aspekt ist eine Vorrichtung zum Bereitstellen eines Verhaltensmodells, insbesondere eines EMV-Verhaltensmodells, in Form von Modelldaten für die Simulation einer durch das Verhaltensmodell beschriebenen elektrischen oder elektronischen Komponente in einer Simulationsvorrichtung vorgesehen, wobei das Verhaltensmodell das Verhalten an einem oder mehreren elektrischen Anschlüssen der Komponente beschreibt, indem das elektrische Verhalten an jedem der Anschlüsse der Komponente durch einen Anschluss-Äquivalenzschaltkreis als die Wirkung von komplexen, frequenzabhängigen elektrischen Größen von passiven elektrischen Bauelementen, insbesondere Admittanzen oder Impedanzen, und eines Quellelements, insbesondere einer Spannungs- und/oder einer Stromquelle, beschrieben wird. Die Vorrichtung ist ausgebildet, um das Verhaltensmodell durch Messung einer Impedanz/Admittanzmatrix im passiven, unbelasteten Zustand der Anschlüsse mithilfe eines Netzwerkanalysators und durch Bestimmen der komplexen, frequenzabhängigen elektrischen Größen der Quellenelemente mithilfe der Messung der Ströme und/oder Spannungen an den Anschlüssen unter einer einzigen Lastbedingung zu ermitteln. Eine solche Vorrichtung ermöglicht die automatische oder halbautomatische Vermessung der Komponente insbesondere durch eine Computerimplementierung des oben beschriebenen Verfahrens zum Bereitstellen des Verhaltensmodells.

Gemäß einem weiteren Aspekt ist ein Verfahren zur Simulation einer Komponente anhand eines der Komponente zugeordneten Verhaltensmodells vorgesehen, wobei das Verhalten der Komponente mithilfe des Verhaltensmodells, das entsprechend des obigen Verfahrens ermittelt ist, simuliert wird.

Gemäß einem weiteren Aspekt ist eine Simulationsvorrichtung zur Simulation einer Komponenten anhand eines der Komponente zugeordneten Verhaltensmodells vorgesehen, wobei die Simulationsvorrichtung ausgebildet ist, um das Verhalten der Komponente mithilfe des Verhaltensmodells, dass entsprechend des obigen Verfahrens ermittelt ist, simuliert wird. Eine solche Simulationsvorrichtung ermöglicht anwenderseitig die computerimplementierte EMV-Simulation der Komponente durch Nutzung des bereitgestellten Verhaltensmodells.

### Kurzbeschreibung der Zeichnungen

Ausführungsformen werden nachfolgend anhand der beigefügten Zeichnungen näher erläutert. Es zeigen:
- Figur 1: eine graphische Darstellung eines Systems zur Vermessung einer Komponente, um einen Anschluss-Äquivalenzschaltkreis zu bestimmen;
- Figur 2: ein Flussdiagramm zur Veranschaulichung eines Verfahrens zum Bereitstellen eines EMV-Verhaltensmodells
- Figur 3: eine Anordnung zur Messung der Stromquellen für den Anschluss-Äquivalenzschaltkreis; und
- Figur 4: ein Flussdiagramm zur Veranschaulichung eines Verfahrens zum Anwenden eines EMV-Verhaltensmodells und Simulation einer elektrischen bzw. elektronischen Komponente basierend auf dem EMV-Verhaltensmodell.

### Beschreibung von Ausführungsformen

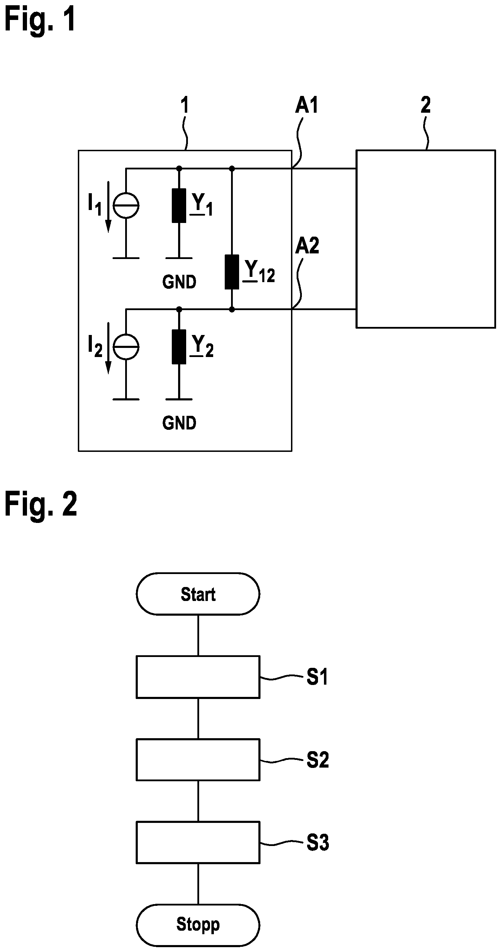

In Figur 1 ist eine elektrische bzw. elektronische Komponente 1 mit zwei Anschlüssen A1 und A2 mit einem internen Hilfsschaltkreis dargestellt, um die allgemeine Idee des Anschluss-Äquivalenzschaltkreises und das entsprechende EMV-Verhaltensmodell zu illustrieren. Zu der elektrische bzw. elektronische Komponente 1 soll durch Vermessen eine Modellkomponente erstellt werden, die einem Simulationsmodell für die elektrische bzw. elektronische Komponente 1 entspricht.

Die elektronische Komponente 1 weist im hier beschriebenen Beispiel zwei Anschlüsse auf, die in der Modellkomponente als A1 und A2 bezeichnet sind, im allgemeinen Fall kann die Komponente beliebig viele Anschlüsse aufweisen. Jeder Anschluss A1, A2 ist dazu bezüglich eines Massepotenzials GND definiert. Die zu modellierende elektrische bzw. elektronische Komponente 1 weist ein lineares und zeitinvariantes Verhalten an dem zu modellierenden Anschluss auf. Die Komponente 1 kann aktiv oder passiv sein, wobei im Folgenden angenommen wird, dass die Anschlüsse A1, A2 aktiv sind.

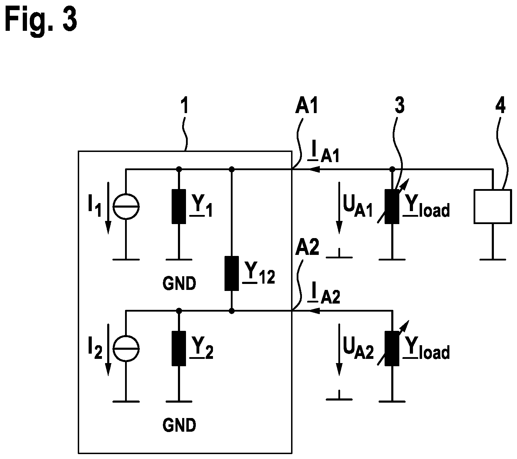

Die Verhaltenscharakterisierung der beiden Anschlüsse erfolgt durch Bestimmung einer zugehörigen Impedanz-/Admittanzmatrix und der Charakteristik der Stromquellen für jeden der Anschlüsse A1, A2. Im beschriebenen Beispiel könnte die entstehende Schaltung wie in Fig. 3 dargestellt beschrieben werden. Im weiteren wird von Admittanzen und Stromquellen als Elementen des Anschluss-Äquivalenzschaltkreises ausgegangen.

Nach bisheriger Vorgehensweise erfolgt die Verhaltenscharakterisierung an den Anschlüssen A1, A2 durch Anschließen von verschiedenen externen Lasten an den jeweiligen Anschluss A1, A2. Jede der Lastbedingungen erzeugt Ströme und Spannungen an allen Anschlüssen. Die Anzahl der erforderlichen Lastbedingungen hängt damit von der Anzahl der Anschlüsse ab. In der Zeitdomäne existieren Werte für jeden Zeitschritt. In der Frequenzdomäne existieren ein komplexe Werte für alle Frequenzen. Für die Ermittlung der gesuchten Impedanzen/Admittanzen und Stromquellen muss entsprechend ein Gleichungssystem mit den Daten aus allen Lastbedingungen gelöst werden.

Für die Erstellung des gesamten Verhaltensmodells würde diese Vorgehensweise mit komplexen Werten für alle interessierenden Frequenzpunkte erfordern. Da auch die Phasenlagen der Ströme und Spannungen relevant sind, müssten die Phasenbezüge der Größen an den Anschlüssen zueinander sowie auch bezüglich der für die Vermessung verwendeten Lastbedingungen zueinander bekannt sein. In der Praxis ist dieser Phasenbezug selten bekannt. Diese Vorgehensweise würde zudem eine starke Änderung der Lastbedingung erfordern, die oft zu unerwünschten nichtlinearen Verhaltensänderungen der vermessenen Komponente führen kann, so dass diese Vorgehensweise aus den beschriebenen Gründen nur für Modelle sinnvoll anwendbar ist.

In der Regel weisen Komponenten an ihren Anschlüssen eine Mischung aus linear zeitinvariantem und nichtlinear oder zeitvarianten Verhalten auf. Für die nachfolgend beschriebene Modellerstellung wird angenommen, dass die äquivalenten Admittanzen des Anschluss-Äquivalenzschaltkreises ein lediglich linear zeitinvariantes Verhalten aufweisen und mit entsprechenden Elementen beschrieben werden können. Dies ist möglich, da die passiven linearen zeitinvarianten Strukturen, wie z.B. passive EMI-Filter nahe der Anschlüsse der Komponente, in der Regel die wichtigste Einflussgröße auf die äquivalente Impedanz/Admittanz darstellen.

Um die Nachteile der obigen herkömmlichen Vorgehensweise zu vermeiden, ist zur Modellerstellung ein Verfahren vorgesehen, dass nachfolgend in Verbindung mit dem Flussdiagramm der Figur 2 näher beschrieben wird.

In Schritt S1 werden die Anschlüsse der Komponente durch eine Messung mit einem Netzwerkanalysator (VNA) 2 vermessen, um eine Admittanz/Impedanzmatrix aller modellierten Anschlüsse in einem passiven Zustand der Komponente 1 zu bestimmen. Für die beispielhafte Erstellung eines Modells mit den beiden Anschlüssen A1 und A2 kann dies als Admittanzen Y1, Y2 und Y12 dargestellt werden.

Die VNA-Messung erfolgt für alle Anschlüsse der Komponente 1 gleichzeitig und liefert Scattering-Parameter, die zu Admittanzparametern transformierbar sind und die den Admittanzelementen des Thévenin-Äquivalenzschaltkreises entsprechen oder in diese umgewandelt werden können.

Ein Netzwerkanalysator 2 wird allgemein verwendet, um die Streuparameter (S-Parameter), also die Wellengröße der Reflexion und Transmission an elektrischen Anschlüssen einer Komponente als Funktion der Frequenz zu messen. Netzwerkanalysatoren werden für das Ermitteln der Übertragungseigenschaften von beispielsweise Filtern oder Verstärkern bis hin zur Vermessung komplexer Übertragungsstrecken verwendet. Bei einem Netzwerkanalysator wird die zu vermessende Komponente durch im Netzwerkanalysator eingebaute Messgeneratoren (Sender) gespeist und zugleich die dabei auftretenden Signaländerungen durch Messempfänger im Netzwerkanalysator erfasst. Damit lässt sich die Messung von Sende- und Empfangssignal als relative Messung gestalten und die Messwerte zueinander in Relation setzten. Durch einen Netzwerkanalysator wird somit die Komponente nicht unter Last mit einem sich möglichst passiv verhaltenen Messgerät vermessen, sondern die Komponente wird für sich alleine vom Netzwerkanalysator versorgt und dabei in seinen Eigenschaften vermessen.

Durch den Netzwerkanalysator 2 kann also die Admittanz/Impedanzmatrix der Anschlüsse der Komponente 1 bestimmt werden.

Nach diesem Schritt sind die Stromquellen I des Äquivalenzschaltkreises die verbleibenden unbekannten Elemente.

In Schritt S2 wird durch gleichzeitige Messung in einem einzigen Lastzustand die Größe einer dem jeweiligen Anschluss A1, A2 zugeordneten Stromquelle ermittelt. Dazu werden die Komponente aktiv betrieben, wie beispielhaft durch das Anlegen von Lasten Y_{load} in Fig.3 dargestellt, und die resultierenden Spannungen oder Ströme V_{A1} oder I_{A1} bzw. V_{A2} oder I_{A2} an den Anschlüssen A1,A2 gemessen. Aus diesen Größen können zusammen mit der gemessenen passiven Impedanz/Admittanzmatrix sowie den bekannten äußeren Lasten die gesuchten Quellenelemente des Modells berechnet werden. Dadurch kann eine stabile Modellerzeugung gewährleistet werden, weil nur ein Lastzustand notwendig ist, unabhängig von der Anzahl der Anschlüsse.

Zur Messung der Stromquellen für den Anschluss-Äquivalenzschaltkreis ist eine Anordnung, wie in Figur 3 dargestellt, vorgesehen. Die Messung sieht einen Anschluss der Komponente 1 an eine Lastadmittanz 3 und ein Oszilloskop 4 vor.

Eine erfolgreiche Berechnung der äquivalenten Stromquellen erfordern linear unabhängige Potenziale, die mithilfe des Oszilloskops 4 gemessen werden können. Auf diese Weise können die zugehörigen Stromquellen für jeden Anschluss bestimmt werden.

In Schritt S3 wird basierend auf den bekannten Admittanzen und den in Schritt S2 bestimmten Stromquellen, die jeweils ein frequenzabhängiges Verhalten aufweisen, ein Verhaltensmodell entsprechend des Anschluss-Äquivalenzschaltkreises definiert.

Ein so erstelltes Verhaltensmodell kann in einem Beschreibungsformat dargestellt werden, wie es beispielsweise als ein Touchstone-Format bekannt ist.

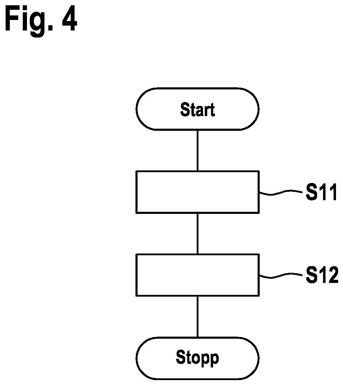

Figur 4 zeigt anhand eines Flussdiagramms eine beispielhafte Anwendung des vorgeschlagenen Verhaltensmodells.

In Schritt S11 wird von einem Hersteller eine EMV-Verhaltensmodell bereitgestellt.

Nach der Übermittlung des Verhaltensmodells kann dieses zur Simulation des EMV-Verhaltens der durch die Modellkomponente des Verhaltensmodells beschriebenen Komponente genutzt werden.

In Schritt S12 wird die Simulation durchgeführt und das Frequenzverhalten der durch das Verhaltensmodell definierten Komponente ermittelt.

## Patentansprüche

1. Verfahren, insbesondere computer-implementiertes Verfahren, zum Bereitstellen eines Verhaltensmodells, insbesondere eines Verhaltensmodells zur elektromagnetischen Verträglichkeit, d.h. EMV-Verhaltensmodells, in Form von Modelldaten für die Simulation einer durch das Verhaltensmodell beschriebenen elektrischen oder elektronischen Komponente (1) in einer Simulationsvorrichtung, wobei das Verhaltensmodell das Verhalten an einem oder mehreren elektrischen Anschlüssen (A1, A2) der Komponente (1) beschreibt, indem das elektrische Verhalten an jedem der Anschlüsse (A1, A2) der Komponente durch einen Anschluss-Äquivalenzschaltkreis als die Wirkung von komplexen, frequenzabhängigen elektrischen Größen von passiven elektrischen Bauelementen, nämlich Admittanzen oder Impedanzen, und eines Quellenelements, insbesondere einer Spannungs- und/oder einer Stromquelle, beschrieben wird,
**dadurch gekennzeichnet, dass**
das Verhaltensmodell durch Messung (S1) einer Impedanzmatrix bzw. Admittanzmatrix im passiven, unbelasteten Zustand der Anschlüsse mithilfe eines Netzwerkanalysators (2) und durch Bestimmen (S2) der komplexen, frequenzabhängigen elektrischen Größen des Quellenelementes mithilfe der Messung der Ströme und/oder Spannungen an den Anschlüssen (A1, A2) unter einer einzigen Lastbedingung ermittelt wird.

2. Verfahren nach Anspruch 1, wobei das Verhaltensmodell die Anschlüsse in Bezug auf ein Massepotenzial und in Bezug zu den übrigen der Anschlüsse definiert.

3. Verfahren nach einem der Ansprüche 1 bis 2, wobei zur Simulation des Verhaltens der Komponente (1) ausschließlich das Verhaltensmodell verwendet wird.

4. Verfahren nach einem der Ansprüche 1 bis 3, wobei das Verhaltensmodell in einem Touchstone-Format bereitgestellt wird.

5. Verfahren nach einem der Ansprüche 1 bis 4, wobei das Verhaltensmodell eine reale Komponente mit einer Anzahl von elektrischen Anschlüssen beschreibt und dieselbe Anzahl von virtuellen Anschlüssen für die Simulation bereitstellt.

6. Verfahren nach einem der Ansprüche 1 bis 5, wobei die komplexe, frequenzabhängige elektrische Größe des Quellenelements jedes Anschlusses (A1, A2) frequenzabhängig mithilfe eines Oszilloskops (4) bestimmt wird, indem insbesondere die aufgezeichneten Zeitsignale in den Frequenzbereich umgerechnet werden.

7. Verfahren nach einem der Ansprüche 1 bis 6, wobei die Vermessung der elektrischen Größe der passiven elektrischen Bauelementen des Anschluss-Äquivalenzschaltkreis im unbelasteten Zustand für jeden Anschluss gleichzeitig erfolgt.

8. Verfahren nach einem der Ansprüche 1 bis 7, wobei die Vermessung der elektrischen Größe des Quellenelementes des Anschluss-Äquivalenzschaltkreis mithilfe einer Lastadmittanz (3) für jeden Anschluss, insbesondere gleichzeitig, erfolgt.

9. Vorrichtung zum Bereitstellen eines Verhaltensmodells, insbesondere eines Verhaltensmodells zur elektromagnetischen Verträglichkeit, d.h. EMV-Verhaltensmodells, in Form von Modelldaten für die Simulation einer durch das Verhaltensmodell beschriebenen elektrischen oder elektronischen Komponente (1) in einer von der Vorrichtung umfassten Simulationsvorrichtung, wobei das Verhaltensmodell
das Verhalten an einem oder mehreren elektrischen Anschlüssen (A1, A2) der Komponente (1) beschreibt, indem das elektrische Verhalten an jedem der Anschlüsse (A1, A2) der Komponente (1) durch einen Anschluss-Äquivalenzschaltkreis als die Wirkung von komplexen, frequenzabhängigen elektrischen Größen von passiven elektrischen Bauelementen, nämlich Admittanzen oder Impedanzen, und eines Quellelements, insbesondere einer Spannungs- und/oder einer Stromquelle, beschrieben wird, **dadurch gekennzeichnet, dass**
die Vorrichtung ausgebildet ist, um das Verhaltensmodell durch Messung einer Impedanzmatrix bzw. Admittanzmatrix im passiven, unbelasteten Zustand der Anschlüsse mithilfe eines Netzwerkanalysators (2) und durch Bestimmen der komplexen, frequenzabhängigen elektrischen Größen des Quellenelementes mithilfe der Messung der Ströme und/oder Spannungen an den Anschlüssen (A1, A2) unter einer einzigen Lastbedingung zu ermitteln.

10. Computer-implementiertes Verfahren zur Simulation einer Komponente anhand eines der Komponente zugeordneten Verhaltensmodells, wobei das Verhalten der Komponente mithilfe des Verhaltensmodells, das entsprechend des Verfahrens nach einem der Ansprüche 1 bis 8 auf einer Vorrichtung gemäß Anspruch 9 ermittelt ist, simuliert wird.

11. Computerprogramm, das das Verfahren nach Anspruch 10 codiert.

12. Maschinenlesbares Speichermedium, auf welchem ein Computerprogramm nach Anspruch 11 gespeichert ist.

## Claims

1. Method, in particular computer-implemented method, for providing a behavioural model, in particular a behavioural model for electromagnetic compatibility, that is to say EMC behavioural model, in the form of model data for the simulation of an electrical or electronic component (1) described by the behavioural model in a simulation device, wherein the behavioural model describes the behaviour at one or more electrical connections (A1, A2) of the component (1) by virtue of the electrical behaviour at each of the connections (A1, A2) of the component being described by a connection equivalent circuit as the effect of complex, frequency-dependent electrical variables of passive electrical components, in particular admittances or impedances, and of a source element, in particular a voltage and/or a current source,
**characterized in that**
the behaviour model is determined by measuring (S1) an impedance matrix or admittance matrix in the passive, unloaded state of the connections using a network analyser (2) and by determining (S2) the complex, frequency-dependent electrical variables of the source element by measuring the currents and/or voltages at the connections (A1, A2) under a single load condition.

2. Method according to Claim 1, wherein the behaviour model defines the connections with respect to an earth potential and with respect to the other terminals.

3. Method according to either one of Claims 1 and 2, wherein only the behaviour model is used to simulate the behaviour of the component (1).

4. Method according to any one of Claims 1 to 3, wherein the behaviour model is provided in a touchstone format.

5. Method according to any one of Claims 1 to 4, wherein the behaviour model describes a real component having a number of electrical connections and provides the same number of virtual connections for the simulation.

6. Method according to any one of Claims 1 to 5, wherein the complex, frequency-dependent electrical variable of the source element of each connection (A1, A2) is determined in a frequency-dependent manner with the aid of an oscilloscope (4), in particular by converting the recorded time signals into the frequency domain.

7. Method according to any one of Claims 1 to 6, wherein the electrical variable of the passive electrical components of the connection equivalent circuit in the unloaded state is measured for each connection simultaneously.

8. Method according to any one of Claims 1 to 7, wherein the electrical variable of the source element of the connection equivalent circuit is measured for each connection, in particular simultaneously, with the aid of a load admittance (3).

9. Apparatus for providing a behavioural model, in particular a behavioural model for electromagnetic compatibility, that is to say EMC behavioural model, in the form of model data for the simulation of an electrical or electronic component (1) described by the behavioural model in a simulation device included in the apparatus, wherein the behavioural model describes the behaviour at one or more electrical connections (A1, A2) of the component (1) by virtue of the electrical behaviour at each of the connections (A1, A2) of the component (1) being described by a connection equivalent circuit as the effect of complex, frequency-dependent electrical variables of passive electrical components, in particular admittances or impedances, and of a source element, in particular a voltage and/or a current source, **characterized in that**
the apparatus is designed to determine the behaviour model by measuring an impedance matrix or admittance matrix in the passive, unloaded state of the connections using a network analyser (2) and by determining the complex, frequency-dependent electrical variables of the source element by measuring the currents and/or voltages at the connections (A1, A2) under a single load condition.

10. Computer-implemented method for simulating a component using a behaviour model associated with the component, wherein the behaviour of the component is simulated with the aid of the behaviour model determined in accordance with the method according to any one of Claims 1 to 8 on an apparatus according to Claim 9.

11. Computer program which codes the method according to Claim 10.

12. Machine-readable storage medium on which a computer program according to Claim 11 is stored.

## Revendications

1. Procédé, en particulier procédé mis en œuvre par ordinateur, pour la fourniture d'un modèle de comportement, en particulier d'un modèle de comportement de la compatibilité électromagnétique, c'est-à-dire d'un modèle de comportement CEM, sous forme de données de modèle destinées à la simulation d'un composant (1) électrique ou électronique décrit par le modèle de comportement dans un dispositif de simulation, dans lequel le modèle de comportement décrit le comportement au niveau d'une ou de plusieurs bornes électriques (A1, A2) du composant (1) en décrivant le comportement électrique à chacune des bornes (A1, A2) du composant par un circuit équivalent de borne comme l'effet de grandeurs électriques complexes, dépendant de la fréquence, de composants électriques passifs, à savoir d'admittances ou d'impédances, et d'un élément source, en particulier d'une source de tension et/ou de courant,
**caractérisé en ce que**
le modèle de comportement est déterminé par mesure (S1) d'une matrice d'impédance ou d'une matrice d'admittance à l'état passif et non chargé des bornes à l'aide d'un analyseur de réseau (2) et par détermination (S2) des grandeurs électriques complexes, dépendant de la fréquence, de l'élément source à l'aide de la mesure des courants et/ou des tensions aux bornes (A1, A2) dans une seule condition de charge.

2. Procédé selon la revendication 1, dans lequel le modèle de comportement définit les bornes par rapport à un potentiel de masse et par rapport aux autres bornes.

3. Procédé selon l'une quelconque des revendications 1 à 2, dans lequel pour la simulation du comportement du composant (1), seul le modèle de comportement est utilisé.

4. Procédé selon l'une quelconque des revendications 1 à 3, dans lequel le modèle de comportement est fourni dans un format Touchstone.

5. Procédé selon l'une quelconque des revendications 1 à 4, dans lequel le modèle de comportement décrit un composant réel pourvu d'un certain nombre de bornes électriques et fournit le même nombre de bornes virtuelles pour la simulation.

6. Procédé selon l'une quelconque des revendications 1 à 5, dans lequel la grandeur électrique complexe, dépendant de la fréquence, de l'élément source de chaque borne (A1, A2) est déterminée en fonction de la fréquence à l'aide d'un oscilloscope (4), en particulier par conversion des signaux temporels enregistrés dans le domaine fréquentiel.

7. Procédé selon l'une quelconque des revendications 1 à 6, dans lequel la mesure de la grandeur électrique des éléments électriques passifs du circuit équivalent de borne à l'état non soumis à une charge est effectuée simultanément pour chaque borne.

8. Procédé selon l'une quelconque des revendications 1 à 7, dans lequel la mesure de la grandeur électrique des éléments sources du circuit équivalent de borne est effectuée à l'aide d'une admittance de charge (3) pour chaque borne, en particulier simultanément.

9. Dispositif pour la fourniture d'un modèle de comportement, en particulier d'un modèle de comportement de la compatibilité électromagnétique, c'est-à-dire d'un modèle de comportement CEM, sous forme de données de modèle destinées à la simulation d'un composant (1) électrique ou électronique décrit par le modèle de comportement dans un dispositif de simulation que comporte le dispositif, dans lequel le modèle de comportement décrit le comportement au niveau d'une ou de plusieurs bornes électriques (A1, A2) du composant (1) en décrivant le comportement électrique à chacune des bornes (A1, A2) du composant (1) par un circuit équivalent de borne comme l'effet de grandeurs électriques complexes, dépendant de la fréquence, de composants électriques passifs, à savoir d'admittances ou d'impédances, et d'un élément source, en particulier d'une source de tension et/ou de courant, **caractérisé en ce que**
le dispositif est conçu pour déterminer le modèle de comportement par mesure d'une matrice d'impédance ou d'une matrice d'admittance à l'état passif et non chargé des bornes à l'aide d'un analyseur de réseau (2) et par détermination des grandeurs électriques complexes, dépendant de la fréquence, de l'élément source à l'aide de la mesure des courants et/ou des tensions aux bornes (A1, A2) dans une seule condition de charge.

10. Procédé mis en œuvre par ordinateur pour simuler un composant sur la base d'un modèle de comportement associé au composant, dans lequel le comportement du composant est simulé à l'aide du modèle de comportement qui est déterminé conformément au procédé selon l'une quelconque des revendications 1 à 8 sur un dispositif selon la revendication 9.

11. Programme informatique codant le procédé selon la revendication 10.

12. Support de stockage lisible par machine sur lequel est stocké un programme informatique selon la revendication 11.
